# EUROPÄISCHE PATENTSCHRIFT

(11) **EP 1 401 911 B1**
(45) Veröffentlichungstag und Bekanntmachung des Hinweises auf die Patenterteilung: **07.12.2005**
(21) Anmeldenummer: 02704541.8
(22) Anmeldetag: 26.03.2002
(51) Int. Cl.: C08G 63/80, C08G 63/91, C08L 101/00, C08L 101/08, C08L 101/02, C08L 67/00, C08G 81/00, C08L 67/02, C08G 81/02, C08G 83/00

(54) **MODIFIZIERTE NACHKONDENSIERTE POLYESTER**
MODIFIED POSTCONDENSED POLYESTER
POLYESTERS POSTCONDENSES MODIFIES

(30) Priorität: 03.07.2001 DE 10132928
(43) Veröffentlichungstag der Anmeldung: 31.03.2004
(73) Patentinhaber: Bühler AG, 9240 Uzwil (CH)
(72) Erfinder: BORER, Camille, CH-8247 Flurlingen (CH); CHRISTEL, Andreas, CH-9524 Zuzwil (CH); MANSON, Jan-Anders,E., CH-1071 Chexbres (CH); LETERRIER, Yves, CH-1007 Lausanne (CH)
(74) Vertreter: Frommhold, Joachim
(86) Internationale Anmeldenummer: PCT/CH2002/000177
(87) Internationale Veröffentlichungsnummer: WO 2003/004546

(56) Entgegenhaltungen:
- EP-A- 0 819 716
- EP-A- 1 177 919
- WO-A-01/74946
- WO-A-97/45474
- WO-A1-01/79352
- WO-A1-02/079311
- WO-A1-02/092668
- DE-A- 19 905 877
- US-A- 5 480 944
- US-A- 5 998 565
- US-A- 6 099 778
- CARR P L ET AL: "Dielectric and mechanical characterization of aryl ester dendrimer/PET blends" POLYMER, ELSEVIER SCIENCE PUBLISHERS B.V, GB, Bd. 37, Nr. 12, 1996, Seiten 2395-2401, XP004069150 ISSN: 0032-3861
- MULKERN T J ET AL: "Processing and characterization of reactive polystyrene/hyperbranched polyester blends" POLYMER, ELSEVIER SCIENCE PUBLISHERS B.V, GB, Bd. 41, Nr. 9, April 2000 (2000-04), Seiten 3193-3203, XP004184965 ISSN: 0032-3861
- JANG J. & AL.: "Crystallization behavior of poly(ethyleneterephthalate) blended with hyperbranched polymers: the effect of terminal groups and composition of hyperbranched polymers" MACROMOLECULES, Bd. 33, Nr. 5, 2000, Seiten 1864-1870, XP001079109

## Beschreibung

Die Erfindung bezieht sich auf ein Verfahren zur Herstellung eines modifizierten Polyesters mit verbesserten rheologischen und mechanischen Eigenschaften gemäss Anspruch 1, insbesondere auf ein durch das erfindungsgemässe Verfahren hergestelltes Produkt mit verbesserten mechanischen Eigenschaften, sowie auf eine Verwendung eines Additivpakets für die Herstellung eines derartigen modifizierten Polyesters gemäss Anspruch 19.

Es ist bekannt, Polyester zur Verbesserung der rheologischen wie auch mechanischen Eigenschaften zusammen mit reaktiven Additiven zu verarbeiten. Erfolgt diese Verarbeitung in der Schmelze zum Beispiel in einem Extruder, so ist der Polyester gleichzeitig zu der Aufbaureaktion mit dem reaktiven Additiv auch verschiedenen Abbaureaktionen unterworfen, die das Erreichen eines hohen Molekulargewichts begrenzen oder ihm sogar entgegenwirken.

Besonders dann, wenn Additive mit drei oder mehreren funktionellen Gruppen eingesetzt werden, kann ein inhomogenes Gemisch aus stark vernetzten Partikeln oder Gels in einer sonst niedermolekularen Matrix entstehen.

Demzufolge müssen kurze Verarbeitungszeiten eingesetzt werden, die es jedoch nicht zulassen, dass sämtliche oder nahezu sämtliche der reaktiven Stellen des reaktiven Additives mit dem Polyester reagieren.

Es ist auch bekannt, dass sich durch Nachkondensation in der Festphase eine vollständigere Reaktion erzielen lässt. Dabei ist jedoch zu beachten, dass sich durch den Einsatz der üblicherweise kleinen reaktiven Additivmoleküle mit einigen wenigen funktionellen Gruppen nur eine geringe Anzahl von Polyesterketten miteinander verbinden lässt ohne gleichzeitig zu einer Vernetzung und somit Inhomogenität und/oder Versprödung zu führen.

Auch beim Einsatz eines mehrheitlich linearen Makromoleküls mit mehreren funktionellen Gruppen besteht die Gefahr der Vernetzung.

Beim Einsatz von reaktiven Additiven mit nur zwei funktionellen Gruppen besteht zwar keine Gefahr der Vernetzung, eine Verzweigung zur Verbesserung der rheologischen Eigenschaften kann jedoch nicht erzielt werden.

Der Erfindung liegt daher die Aufgabe zugrunde, ein Verfahren zur Verfügung zu stellen, bei dem eine grosse Zahl von Polyesterketten zu Makromolekülen mit hohem Verzwelgungsgrad und sehr hohem Molekulargewicht verbunden werden; ohne dabei jedoch eine massgebliche Menge an Vernetzungen zu erzeugen.

Diese Aufgabe wird durch das Verfahren nach Anspruch 1 gelöst, das durch die folgenden Schritte gekennzeichnet ist:
- Mischen und Aufschmelzen eines Polyesters mit einem hyperverzweigten Polymer (HBP);
- Überführen der geschmolzenen Mischung durch Abkühlen in eine feste Form;
- Durchführen einer Festphasen-Nachkondensation an der Mischung in fester Form, wobei das HBP sechs oder mehr freie reaktive Gruppen und vorzugsweise zwölf oder mehr freie reaktive Gruppen besitzt.

Mittels des erfindungsgemässen Verfahrens lassen sich gezielt modifizierte Polyester mit speziellen rheologischen und letztendlich speziellen mechanischen Eigenschaften für spezielle Endprodukte aus diesem Polyestermaterial herstellen, indem in den genannten Schritten die folgenden und ggf. noch weitere Parameter je nach Bedarf eingestellt werden:
- Konzentration des HBP in dem zu verarbeitenden Gemisch
- Art des HBP, Insbesondere Art und Zahl der funktionellen Gruppen
- Behandlungsdauer in dem jeweiligen Schritt
- Behandlungstemperatur in dem Jeweiligen Schritt
- Intensität der auf das Gemisch einwirkenden Scherung
- etc.

Aus dem Artikel "Dielectric and mechanical characterization of aryl ester dendrimer/PET blends", POLYMER, ELSEVIER SCIENCE PUBLISHERS B.V., GB, Bd. 37, Nr. 12, 1996, Seiten 2395-2401, ist bekannt, dass sich durch Hinzugabe von Dendrimeren zu PET eine signifikante Modifikation des Verhaltens unter Zugbelastung ergibt, was sich als die Verstreckung eines Molekül-Netzwerkes interpretieren lässt.

Die US-A-5,998,564 beschreibt ein Verfahren zur Herstellung einer Schmelze-Mischung, der ein Dendrimer beigemischt ist.

Die EP-A-0 819 716 beschreibt ein Verfahren zum Herstellen eines aromatischen Polyesterharzes, wobei der Polyesterschmelze ein Dianhydrid einer Tetracarbonsäure (PMDA) beigemischt wird, wonach eine Extrusion, Verfestigung zu Chips, eine Kristallisation und ggf. eine Festphasen-Nachkondensation erfolgt, wobei durch die Beimischung der PMDA eine signifikante Verkürzung der erforderlichen SSP-Behandlungszeit erzielt wird.

Von einer Verbesserung sowohl der maximalen Zugspannung als auch des maximalen Verstreckungsfaktor ist jedoch nicht die Rede.

Dadurch können insbesondere sowohl der Verzweigungsgrad als auch der Vernetzungsgrad der Makromoleküle gezielt beeinflusst werden. So kann z.B. durch mehr Verzweigung der einzelnen separaten Moleküle und gleichzeitig weniger Vernetzung der Moleküle eine hohe Schmelzefestigkeit bei gleichzeitig geringer Sprödigkeit (hoher Bruchfestigkeit) der erstarrten Schmelze (Endprodukt) erzielt werden.

Weitere vorieilhafte Ausführungen des erfindungsgemässen Verfahrens ergeben sich aus den Unteransprüchen und aus der folgenden Beschreibung wesentlicher Elemente der vorliegenden Erfindung.

### PET

Ein Polyester, insbesondere ein thermoplastisches Polyethylenterephthalat, Polybutylenterephthalat, Polyethylennaphthalat oder Polycarbonat, wird verwendet. Sowohl Neumaterial als auch rezykliertes Material, insbesondere in Form rezyklierter PET-Flaschenschnitzel, kann verwendet werden. Das Polyestermaterial kann als Homopolymer oder als Copolymer vorliegen, wobei das Molekulargewicht des Polyesters, gemessen als intrinsische Viskosität IV, zwischen 0.2 und 1.0, typischerweise zwischen 0.6 und 0.85 dl/g liegt. Rezykliertes Material umfasst Material, das als Konsumenten-Rezyklat wie auch industrielles Rezyklat von Produkten wie Flaschen, Folien oder Fasern anfällt und entweder direkt verarbeitet wird oder vorgängig sortiert, gewaschen und zerkleinert wird.

### HBP

Als hyperverzweigtes Polymer (Hyper Branched Polymer: HBP) oder auch als hyperverzweigte dendritische Makromoleküle (Hyperbranched Dendritic Macromolecules) werden generell dreidimensionale, stark verzweigte Moleküle mit einer baumählichen Verzweigungsstruktur bezeichnet. Dazu gehören die stark symmetrischen Dendrimere, wie auch ähnliche Strukturen mit höherem Asymmetriegrad. Hyperverzweigte dendritische Makromoleküle bestehen aus einem Kern mit einer oder mehreren reaktiven Stellen oder funktionellen Gruppen und einer Anzahl Verzweigungsschichten, die aus einem oder mehreren verzweigten Kettenverlängerern mit wenigstens drei reaktiven Stellen oder funktionellen Gruppen bestehen, sowie optional einer oder mehrerer Abstandhalterschichten und/oder einer Schicht kettenbeendender Moleküle oder funktioneller Gruppen, wobei zumindest eine reaktive Stelle oder funktionelle Gruppe mit einer reaktiven Stelle des Polymers, in das das HBP eingearbeitet werden soll, reagieren und zu einer Verbindung führen kann . Für die Reaktion mit Polyester bevorzugte funktionelle Gruppen sind zum Beispiel Hydroxyl-, Epoxy-, Anhydrid- oder Carboxyl- Gruppen. Durch Wiederholung 44der Verzweigungsschichten kann eine erhöhte Anzahl von funktionellen Gruppen erzielt werden. Eine genaue Beschreibung ist in der WO 97/45474 gegeben, die hiermit in diese Anmeldung eingeschlossen wird.

### Additive

Das HBP kann alleine oder als Bestandteil eines Additivpaketes zugegeben werden. Zur Herstellung des Additivpaketes werden weiter Additive eingesetzt aus der Gruppe der Schlagzähmodifikatoren, Nukleierungsmittel, Katalysatoren, Farbstoffe und Pigmente, Stabilisatoren, Verträglichkeitsmachern, molekulargewichterhöhenden oder elastizitätserhöhenden Additive, verstärkenden Fasern oder Füllstoffe. Zusätzlich kann ein Trägermaterial verwendet werden, in das sich alle Additive einarbeiten lassen. Das Additivpaket kann sowohl als homogenes Pulver oder Granulat wie auch als einfache Additivmischung vorliegen.

### Verarbeiten: Mischen

Das Mischen und Schmelzen des Polyesters mit dem HBP kann in einem Extruder, Kneter oder einer anderen geeigneten Apparatur, wie zum Beispiel einem Schmelzepolymerisationsreaktor, wie er bei der Herstellung von Polyester verwendet wird, erfolgen. Als Extruder kommen sowohl Einwellen- und Zweiwellenextruder in Frage, als auch Mehrwellenextruder wie ein Ringextruder oder Planetenextruder. Der Polyester und das HBP können sowohl gleichzeitig wie auch nacheinander in die Mischapparatur eingebracht werden. Dabei kann das HBP als Feststoff dem Polyester im festen wie auch im geschmolzenem Zustand zugeführt werden. Es besteht auch die Möglichkeit, den Polyester und das HBP in getrennten Maschinen aufzuschmelzen und erst anschliessend zu vermischen.
Das HBP kann während des Aufschmelzens und Mischens mit dem Polyester reagieren. Dabei soll der Prozess so geführt werden, insbesondere durch Kontrolle der Verweilzeit und der Temperatur, dass nicht alle freien reaktiven Endgruppen mit dem Polyester reagieren.

Zur Verarbeitung des Polyesters ist es sinnvoll, den Polyester und gegebenenfalls auch das HBP von Wasser zu befreien. Dies geschieht nach bekannten Trocknungsverfahren entweder in einem separaten Trockner oder auch in einem Extruder, und zwar solange sich die Materialien noch im festen Zustand befinden oder aber auch durch Entgasung der Schmelze.

Weitere Verfahrensschritte können dem Aufschmelzvorgang folgen, wie zum Beispiel eine Schmelzeentgasung, Schmelzefiltration, Einmischung und Homogenisierung weiterer Additive oder ein Druckaufbau zur Formgebung und Förderung des Materiales.
Das geschmolzene Material wird durch Abkühlen in Kontakt mit einem geeignetem Kühlmedium, wie zum Beispiel Luft, Wasser oder einer gekühlten Oberfläche, in die Feste Form zurückgeführt. Vorzugsweise wird das Material zuvor durch eine formgebende Düse oder in eine Form gepresst. Ein übliches Verfahren ist die Granulation zum Beispiel durch Stranggranulation oder Kopfgranulation. Es können aber auch Folien oder andere geformte Stücke gegebenenfalls nach einer Zerkleinerung eingesetzt werden.

### Verarbeiten: Festphasen-Nachkondensation und Kristallisation

Während des Schrittes der Festphasen-Nachkondensation reagieren ein Teil oder alle der noch freien reaktiven Endgruppen des HBP mit dem Polyester. Gleichzeitig reagieren die Moleküle des Polyesters miteinander. Beides führt zu einer Erhöhung des Molekulargewichtes, wobei je nach Menge an HBP und Vollständigkeit der Reaktion ein verzweigter oder vernetzter modifizierter Polyester entsteht. In vielen Fällen ist eine Vernetzung nicht erwünscht (Sprödigkeit), und die HBP-Konzentration und Prozessbedingungen werden so gewählt, dass ein verzweigter modifizierter Polyester entsteht.

Die Festphasen-Nachkondensation kann sowohl kontinuierlich wie auch als Batch-Prozess unter Vakuum oder in einem Gasstrom, wie zum Beispiel Luft, Stickstoff, Wasserdampf oder Kohlendioxid, erfolgen.

Vor dem Schritt der Festphasen-Nachkondensation muss üblicherweise ein Schritt der Kristallisation erfolgen. Dieser Kristallisationsschritt kann als Bestandteil des Abkühl- oder Granulationsprozesses oder auch innerhalb des Nachkondensationsreaktors erfolgen. Der Kristallisationsschritt kann aber auch in einem gesondertem Prozessschritt er - folgen. Typischerweise Verwendung finden Reaktoren mit mechanischen Rührern, in denen das Produkt erwärmt wird, oder Apparate, in denen das Produkt durch einen Gasstrom erhitzt und bewegt wird, wie z.B. in einem Fliessbett-, Wirbelbett- oder Sprudelbettapparat. Die Kristallisation kann in einem oder mehreren Schritten erfolgen.

Der Festphasen-Nachkondensation kann ein weiterer Schritt zur Abkühlung oder zur Weiterverarbeitung folgen. Das Abkühlen kann als Bestandteil des Nachkondensationsprozesses oder in einem gesondertem Prozessschritt erfolgen.

Die folgenden Versuche sollen die Vorteile des erfindungsgemässen Verfahrens verdeutlichen. Die Messergebnisse sind in Tabelle 1 zusammengefasst.

### Beispiel 1

Ein Polyester Granulat (Eastman, 9921W) wurde gemahlen und für 12 Stunden bei 105°C im Vakuum getrocknet. Das Material wurde in einem gleichdrehenden Zweiwellenextruder (Prism TSE 16) bei 220°C im Einzugsbereich, 265°C Aufschmelz- und Förderbereich und 240°C an der Düse extrudiert und anschliessend granuliert. Die Lösungsviskosität (IV) in Phenol/Dichlorbenzol, sowie die Dehnungsviskosität bei 270°C mittels eines Kapillarrheometers mit Abzugsvorrichtung wurden gemessen und daraus die Zugspannung bei den jeweiligen Verstreckungsgraden bestimmt.
Die Zugspannung ist berechnet nach : F * (Vf -Vo) / Ad / Vo
Der Verstreckungsfaktor ist berechnet nach Vf/Vo
wobei
- F =: Abzugskraft
- Vf =: Abzugsgeschwindigkeit des Fadens
- Vo =: Austrittsgeschwindigkeit aus der Düse
- Ad =: Düsenfläche

### Beispiel 2

2kg des extrudierten Polyester-Granulates aus Beispiel 1 wurde anschliessend für 20 Minuten bei 175°C unter Luft in einem Fliessbettreaktor kristallisiert. 0.5kg davon wurden für 7 Stunden bei 210°C im Stickstoffstrom nachkondensiert und danach rasch abgekühlt. Wiederum erfolgte eine Bestimmung der Zugspannung bei gegebenen Verstreckungsgraden und des IV.

### Beispiel 3

Ein Polyester-Granulat (Eastman, 9921W; IV = 0.8) wurde gemahlen und mit 0.04% eines ebenfalls gemahlenen HBP (Perstorp, Bolteron H20, ein zweischichtiges dendritisches Polymer mit theoretisch 16 primären Hydroxylgruppen und einem Molekulargewicht von 1747g/mol) vermischt und analog zu den Bedingungen aus Beispiel 1 verarbeitet und gemessen.

### Beispiel 4

Extrudiertes Produkt aus Beispiel 3 wurde analog zu den Bedingungen aus Beispiel 2 verarbeitet und gemessen, wobei jedoch die Nachkondensation über 5 Stunden bei 210°C erfolgte.

### Beispiel 5

Beispiel 3 wurde wiederholt mit 0.1% des HBP.

### Beispiel 6

Extrudiertes Produkt aus Beispiel 5 wurde analog zu den Bedingungen aus Beispiel 2 verarbeitet und gemessen, wobei jedoch die Nachkondensation über 4 Stunden bei 210°C erfolgte.

### Beispiel 7

Beispiel 3 wurde wiederholt jedoch mit 0.04% eines HBP (Perstorp, Bolteron H40, ein vierschichtiges dendritisches Polymer mit theoretisch 64 primären Hydroxylgruppen und einem Molekulargewicht von 7316g/mol).

### Beispiel 8

Extrudiertes Produkt aus Beispiel 7 wurde analog zu den Bedingungen aus Beispiel 2 verarbeitet und gemessen, wobei jedoch die Nachkondensation über 6 Stunden bei 210°C erfolgte.

### Beispiel 9

Beispiel 7 wurde wiederholt jedoch mit 0.1% des HBP.

### Beispiel 10

Extrudiertes Produkt aus Beispiel 9 wurde analog zu den Bedingungen aus Beispiel 2 verarbeitet und gemessen, wobei jedoch die Nachkondensation über 5 Stunden bei 210°C erfolgte.
Spalte A : Beispiel Nummer
Spalte B : IV in [dl/g]
Spalte C : Zugspannung in [bar] bei einem Verstreckungsfaktor von 157
Spalte D : maximale Zugspannung [bar] bei maximalem Verstreckungsfaktor
Spalte E maximaler Verstreckungsfaktor

**Tabelle 1**

| A | B | C | D | E |
|---|---|---|---|---|
| 1 | 0.83 | 11.2 | 21.6 | 231 |
| 2 | 1.06 | 34 | 45.2 | 196 |
| 3 | 0.800 | 6.8 | 12.1 | 267* |
| 4 | 0.987 | 29.7 | 83.3 | 267* |
| 5 | 0.809 | 14.4 | 26.5 | 267* |
| 6 | 0.977 | 61.6 | 61.6 | 157 |
| 7 | 0.812 | 7.8 | 13.2 | 267* |
| 8 | 0.991 | 28.7 | 58.6 | 249 |
| 9 | 0.795 | 13.3 | 23.5 | 231 |
| 10 | 0.981 | 31.3 | 77.4 | 267* |

| | | | | |
|---|---|---|---|---|
| * Maximal erreichbarer Verstreckungsfaktor erreicht ohne Fadenriss. | | | | |

Aus dem Vergleich der Daten in Tabelle 1 wird ersichtlich, dass sich durch Extrusion mit einem HBP die Verstreckbarkeit eines Polyesters verbessern lässt, nicht aber dessen Zugspannung. Im Gegensatz dazu lässt sich die Zugfestigkeit eines Polyesters durch Nachkondensation verbessern, nicht aber dessen Verstreckbarkeit. Wird nun aber die Nachkondensation auf ein Polyester mit einem geringen Anteil eines HBP angewandt, lässt sich ein Material mit deutlich besserer Zugspannung und Verstreckbarkeit herstellen.

## Patentansprüche

1. Verfahren zur Herstellung eines modifizierten Polyesters mit verbesserten rheologischen und mechanischen Eigenschaften, wobei
- ein Polyester mit einem hyperverzweigten Polymer (HBP) vermischt und aufgeschmolzen wird
- die geschmolzene Mischung durch Abkühlen in eine feste Form überführt wird
- die Mischung in fester Form einer Festphasen-Nachkondensation unterzogen wird, **dadurch gekennzeichnet, dass** das HBP sechs oder mehr freie reaktive Gruppen und vorzugsweise zwölf oder mehr freie reaktive Gruppen besitzt.

2. Verfahren nach Anspruch 1, wobei der Polyester ein Polyethylenterephthalat ist.

3. Verfahren nach einem oder mehreren der vorhergehenden Ansprüche, wobei der Polyester ein rezykliertes Polyethylenterephthalat ist.

4. Verfahren nach einem oder mehreren der vorhergehenden Ansprüche, wobei die reaktiven Endgruppen des HBP Hydroxyl-, Carboxyl-, Anhydrid oder EpoxyGruppen, vorzugsweise Hydroxyl-Gruppen sind.

5. Verfahren nach einem oder mehreren der vorhergehenden Ansprüche, wobei das HBP In einer Konzentration bezogen auf den Polyesteranteil von 0.005% bis 5%, vorzugsweise zwischen 0.02% und 0.4% vorliegt.

6. Verfahren nach einem oder mehreren der vorhergehenden Ansprüche, wobei das Mischen und Aufschmelzen des Polyesters und des HBP in einem oder mehreren Extrudern erfolgt.

7. Verfahren nach Anspruch 6, wobei zumindest einer der verwendeten Extruder ein Zweiwellenextruder oder Mehrwellenextruder ist.

8. Verfahren nach Anspruch 6 oder 7, wobei zumindest in einem der Extruder ein oder mehrere weitere Verfahrensschritte erfolgen.

9. Verfahren nach Anspruch 8, wobei der eine oder die mehreren weiteren Verfahrensschritte mindestens einer der Schritte Vortrocknung, Entgasung, Einbringung weiterer Additive oder Homogenisierung sind.

10. Verfahren nach einem der Ansprüche 6 bis 9, wobei zumindest nach der Extrusion in einem der Extruder ein oder mehrere weitere Verfahrensschritte folgen.

11. Verfahren nach Anspruch 10, wobei der eine oder die mehreren weiteren Verfahrensschritte mindestens einer der Schritte Druckaufbau, Schmelzefiltration, Entgasung oder Homogenisierung sind.

12. Verfahren nach einem oder mehreren der vorhergehenden Ansprüche, wobei die geschmolzene Mischung granuliert wird.

13. Verfahren nach einem oder mehreren der vorhergehenden Ansprüche, wobei die geschmolzene Mischung durch eine Stranggranulation granuliert wird.

14. Verfahren nach einem oder mehreren der vorhergehenden Ansprüche, wobei die Festphasen-Nachkondensation bei einer Temperatur zwischen 150°C und 250°C erfolgt.

15. Verfahren nach einem oder mehreren der vorhergehenden Ansprüche, wobei die Festphasen-Nachkondensation kontinuierlich erfolgt.

16. Verfahren nach einem oder mehreren der vorhergehenden Ansprüche, wobei vor der Festphasen-Nachkondensation ein Schritt zur Kristallisation erfolgt.

17. Verfahren nach einem der Ansprüche 1 bis 18, **dadurch gekennzeichnet, dass** die nachkondensierte Mischung in einem weiteren Verfahrensschritt zu einem Produkt verarbeitet wird.

18. Verfahren nach Anspruch 17, wobei es sich bei dem weiteren Verfahrensschritt um ein Spritzgussverfahren, ein Extrusionsblasverfahren, ein Folienextrusionsverfahren, ein Profilextrusionsverfahren, ein Schäumverfahren oder ein Verfahren zur Herstellung von Fasern, Garnen oder Verpackungsbändern handelt.

19. Verwendung eines Additivpakets zur Herstellung eines modifizierten Polyesters, durch ein Verfahren nach einem der Ansprüche 1 bis 16, wobei das Additivpaket aus einem HBP, das sechs oder mehr freie reaktive Gruppen und vorzugsweise zwölf oder mehr freie reaktive Gruppen besitzt, und einem oder mehreren weiteren Additiven, insbesondere Schlagzähmodifikatoren, Nukleierungsmittel, Katalysatoren, Farbstoffe und Pigmente, Stabilisatoren, Verträglichkeitsmacher, molekulargewichterhöhende oder elastizitätserhöhende Additive sowie verstärkende Fasern oder Füllstoffe, besteht.

20. Verwendung nach Anspruch 19, wobei die reaktiven Endgruppen des HBP Hydroxyl-, Carboxyl-, Anhydrid oder Epoxy-Gruppen, vorzugsweise Hydroxyl-Gruppen sind.

## Claims

1. A method for manufacture of a modified polyester with improved rheological and mechanical properties, wherein
- a polyester is mixed with a hyperbranched polymer (HBP) and is melted
- the molten mixture is transformed into a solid by cooling
- the mixture in solid form is subjected to a solid phase post-condensation, **characterized in that** the HBP possesses six or more uncombined reactive groups, and preferably twelve or more uncombined reactive groups.

2. The method according to claim 1, wherein the polyester is a polyethylene terephthalate.

3. The method according to on or more of the preceding claims, wherein the polyester is a recycled polyethylene terephthalate.

4. The method according to one or more of the preceding claims, wherein the uncombined end groups are HBP hydroxyl, carboxyl, anhydride or epoxy groups, preferably hydroxyl groups.

5. The method according to one or more of the preceding claims, wherein the HBP is present in a concentration in relation to the amount of polyester of 0.005 % to 5 %, preferably between 0.02 % and 0.4 %.

6. The method according to one or more of the preceding claims, wherein the mixing and melting of the polyester and HBP is carried out in one or a plurality of extruders.

7. The method according to claim 6, wherein at least one of the extruders used is a two-screw extruder or a multi-screw extruder.

8. The method according to claims 6 or 7, wherein in at least one of the extruders, one or a plurality of additional process steps take place.

9. The method according to claim 8, wherein in the single or the plurality of additional process steps at least one of the steps is pre-drying, degassing, introducing further additives or homogenization.

10. The method according to claims 6 through 9, wherein at least after the extrusion in of the extruders one or a plurality of further process steps follows.

11. The method according to claim 10, wherein in the single or the plurality of additional process steps at least one of the steps is pressure buildup, melt filtration, degassing or homogenization.

12. The method according to one or a plurality of the preceding claims, wherein the molten mixture is granulated.

13. The method according to one or a plurality of the preceding claims, wherein the molten mixture is granulated by means of strand granulation.

14. The method according to one or a plurality of the preceding claims, wherein the solid phase post-condensation takes place at a temperature between 150 °C and 250 °C.

15. The method according to one or a plurality of the preceding claims, wherein the solid phase post-condensation takes place continuously.

16. The method according to one or a plurality of the preceding claims, wherein before the solid phase post-condensation a crystallization step takes place.

17. The method according to one of claims 1 through 16, **characterized in that** the post-condensed mixture is processed to a product in a further process step.

18. The method according to claim 17, wherein in the further step an injection molding process, an extrusion process, a film extrusion process, a profile extrusion process, a foam process or a method for the manufacture of fibers, yarns, or packaging tapes is involved.

19. Use of an additive package for the manufacture of a modified polyester by means of a method according to one of claims 1 through 16, wherein the additive package comprises an HBP, that contains six or more uncombined reactive groups, and one or a plurality of additional additives, especially shock resistant modifiers, nucleation agents, catalysts, dyestuffs and pigments, stabilizers, compatibility producers, molecular weight increasing or elasticity increasing additives as well as reinforcing fibers or fillers.

20. The use according to claim 19, wherein the reactive end groups of the HBP are hydroxyl, carboxyl, anhydride or epoxy groups, preferably hydroxyl groups.

## Revendications

1. Procédé de préparation d'un polyester modifié ayant des propriétés rhéologiques et mécaniques améliorées, dans lequel
- un polyester ayant un polymère hyper-ramifié (HBP) est mélangé et fondu
- le mélange fondu est transformé en un moule solide par refroidissement
- le mélange dans le moule solide est soumis à une post-condensation de phase solide, **caractérisé en ce que** le HBP possède six groupes réactifs libres ou plus, et de préférence douze groupes réactifs libres ou plus.

2. Procédé selon la revendication 1, dans lequel le polyester est un poly(téréphtalate d'éthylène).

3. Procédé selon l'une ou plusieurs des revendications précédentes, dans lequel le polyester est un poly(téréphtalate d'éthylène) recyclé.

4. Procédé selon l'une ou plusieurs des revendications précédentes, dans lequel les groupes terminaux réactifs du HBP sont des groupes hydroxyle, carboxyle, anhydride ou époxy, de préférence hydroxyle.

5. Procédé selon l'une ou plusieurs des revendications précédentes, dans lequel le HBP existe en une concentration de 0,005 % à 5 %, de préférence comprise entre 0,02 % à 0,4 %, par rapport à la portion de polyester.

6. Procédé selon l'une ou plusieurs des revendications précédentes, dans lequel le mélange et la fusion du polyester et du HBP se réalisent dans une ou plusieurs extrudeuses.

7. Procédé selon la revendication 6, dans lequel au moins l'une des extrudeuses employées est une extrudeuse bivis ou multivis.

8. Procédé selon la revendication 6 ou 7, dans lequel au moins une ou plusieurs étapes de procédé supplémentaires se réalisent au moins dans une des extrudeuses.

9. Procédé selon la revendication 8, dans lequel l'une ou les multiples étapes de procédé supplémentaires constituent au moins l'une des étapes: le pré-séchage, le dégazage, l'incorporation d'additifs supplémentaires ou l'homogénéisation.

10. Procédé selon l'une quelconque des revendications 6 à 9, dans lequel au moins après l'extrusion, une ou plusieurs étapes de procédé supplémentaires se réalisent dans une des extrudeuses.

11. Procédé selon la revendication 10, dans lequel l'une ou les multiples étapes de procédé supplémentaires constituent au moins l'une des étapes: l'accumulation de pression, la filtration de la masse fondue, le dégazage ou l'homogénéisation.

12. Procédé selon l'une ou plusieurs des revendications précédentes, dans lequel le mélange fondu est granulé.

13. Procédé selon l'une ou plusieurs des revendications précédentes, dans lequel le mélange fondu est granulé à l'aide d'une granulation de brins.

14. Procédé selon l'une ou plusieurs des revendications précédentes, dans lequel la post-condensation de la phase solide se réalise à une température comprise entre 150 °C et 250 °C.

15. Procédé selon l'une ou plusieurs des revendications précédentes, dans lequel la post-condensation de la phase solide se réalise en continu.

16. Procédé selon l'une ou plusieurs des revendications précédentes, dans lequel une étape se réalise pour la cristallisation avant la post-condensation de la phase solide.

17. Procédé selon l'une quelconque des revendications 1 à 16, **caractérisé en ce que** le mélange post-condensé est transformé en un produit dans une étape de procédé supplémentaire.

18. Procédé selon la revendication 17, dans lequel, quant à l'étape de procédé supplémentaire, il s'agit d'un procédé de moulage par injection, un procédé de soufflage par extrusion, un procédé d'extrusion de feuille, un procédé d'extrusion de profilé, un procédé de moussage ou un procédé pour préparer des fibres, des fils ou des bandes d'emballage.

19. Utilisation d'un paquet d'additifs pour préparer un polyester modifié, à l'aide d'un procédé selon l'une quelconque des revendications 1 à 16, dans lequel le paquet d'additifs est constitué d'un HBP, qui possède six groupes réactifs libres ou plus, et de préférence douze groupes réactifs libres ou plus, et d'un ou plusieurs additifs supplémentaires, en particulier des agents modifiant la résistance au choc, des agents de germination, des catalyseurs, des colorants et des pigments, des stabilisants, des agents donnant la compatibilité, des additifs augmentant la masse moléculaire ou augmentant l'élasticité, ainsi que des fibres ou charges de renforcement.

20. Utilisation selon la revendication 19, dans laquelle les groupes terminaux réactifs du HBP sont des groupes hydroxyle, carboxyle, anhydride ou époxy, de préférence hydroxyle.
